# EUROPEAN PATENT APPLICATION

(11) **EP 4 472 171 A1**
(43) Date of publication of application: **04.12.2024**
(21) Application number: 22929668.6
(22) Date of filing: 28.12.2022
(51) Int. Cl.: H04L 67/06

(54) **MESSAGE SENDING METHOD AND DEVICE, STORAGE MEDIUM AND ELECTRONIC DEVICE**

(30) Priority: 03.03.2022 CN 202210211171
(71) Applicant: ZTE Corporation, Shenzhen, Guangdong 518057 (CN)
(72) Inventor: LIU, Yao, Shenzhen, Guangdong 518057 (CN)
(74) Representative: Mozzi, Matteo
(86) International application number: PCT/CN2022/143056
(87) International publication number: WO 2023/165244

(57) **Abstract**

Provided are a packet sending method and device, a storage medium and an electronic device. The packet sending method includes: acquiring a feature field in a first packet received from a first domain, wherein the feature field is used for acquiring ancillary data information carried in the first packet, and the ancillary data information comprises at least one of: a carrying position of the ancillary data information and a data type of the ancillary data information; converting, according to the feature field, the first packet into a second packet conforming to a data plane format of a second domain; and sending the second packet to the second domain. The provided scheme solves the problem of low packet transmission efficiency between domains of different data planes in related technologies, and improves the packet transmission efficiency on different data planes.

## Description

### Cross-Reference to Related Application

The present disclosure claims priority to Chinese Patent Application No. 202210211171.3, filed with the China National Intellectual Property Administration on March 03, 2022 and entitled "Packet Sending Method and Device, Storage Medium and Electronic Device", which is incorporated herein by reference in its entirety.

### Technical Field

The present disclosure relates to the field of communications, and in particular, to a packet sending method and device, a storage medium and an electronic device.

### Background

A major improvement made by a Multi-Protocol Label Switching (MPLS) technology is the introduction of the concept of labels. According to the MPLS technology, an Internet Protocol (IP) address is mapped to a label with a fixed length, and the label is then used in various packet forwarding and packet switching techniques. An edge device in an MPLS network, upon receiving data packets, analyzes content of the data packets, selects appropriate labels for these data packets, and encapsulates these data packets with the acquired fixed-length labels and transmits the encapsulated data packets to the MPLS network. All routers in the MPLS network use these fixed-length labels instead of the IP header as the basis for forwarding. When the data packets finally exit the MPLS network, the fixed-length labels are stripped from the data packets by the edge device of the MPLS network. This method of utilizing the MPLS technology to forward data packets enhances the efficiency of data forwarding.

The Internet Protocol version 6 (IPv6) defines a set of packet headers, including a basic IPv6 packet header and IPv6 extension headers. The IPv6 extension headers include the Hop-by-Hop Options Header, the Routing Header, the Destination Options Header, etc.

Segment Routing (SR) is a source address-based routing scheme that uses a series of instruction operations (also known as segment operations) carried in the existing label stack (SR-MPLS) of the MPLS network or in the IPv6 Segment Routing Header in an IPv6 packet header (SRv6) to route and transmit data in the network.

In SRv6 network programming, SRv6 Segment is a 128-bit number and is often referred to as an SRv6 Segment Identifier (SID) or short as SID. The SRv6 SID is a network instruction that includes Locator and Function, as well as potential parameters (Argument). The Locator is primarily used for routing functions and is unique within an SR domain. The Function may indicate any function of a device, such as a specific forwarding behavior or a certain type of service. The Argument mainly carries parameters related to the Function. The structure of the SRv6 SID facilitates network programming.

As networks evolve and new types of services emerge, more and more services require data to be carried within or after the MPLS label stack. The existing data indication and carrying methods in the MPLS technology have various shortcomings, such as non-unified schemes and poor scalability. Especially in certain scenarios, multiple types of data need to be stacked at the bottom of the stack, and different nodes need to handle different data, making the original MPLS architecture unable to meet the requirements. Therefore, one of the ongoing projects in the IETF is to design a new MPLS architecture, referred to as MPLS 2.0 in the following text, to better meet the growing and diverse needs for carrying data.

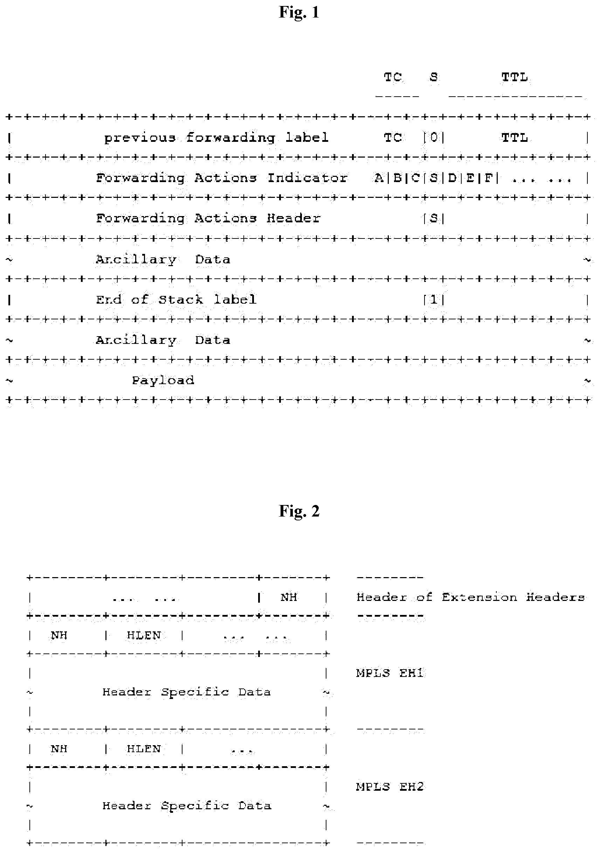

Regardless of how the MPLS 2.0 scheme is designed, the MPLS architecture will ultimately include the following components.
1) Indicator. The Indicator is located within the MPLS label stack, and is used to indicate that data is carried in the stack or after the stack. A possible solution is called a Multi-Purpose Special Label, as shown in Fig. 1. This scheme includes a special label value (as shown in the Forwarding Actions Indicator bits in Fig. 1). The label corresponding to the special label value may be understood as a Multi-Purpose Special Label. Unlike other MPLS labels, the Multi-Purpose Special Label does not contain Traffic Class (TC) and Time to Live (TTL) parts, but instead stores Flag indication bits by using the space corresponding to the TC and the TTL part, wherein different values of the Flag indication bits indicate different meanings. For example, setting bit-A indicates that entropy label information is carried after the Indicator, setting bit-B indicates that network slice identifier information is carried after the Indicator, setting bit-C represents that additional ancillary data information is carried after the label stack, and setting bit-D represents that additional 32 bits are extended to carry more Flag bits (for example, the Forwarding Actions Header part in the figure), and so on.
2) Carried data. The data is carried in the label stack or after the label stack. The type of the data may be identified by using one of the following methods. The type of the data may be identified by a specific method indicated using the Indicator. Alternatively, the data may directly carry the type information of the data. Alternatively, previous data may carry the information indicating the type of the next data. Fig. 2 illustrates a method of carrying data after the label stack. Each MPLS extension header carries a type of data, and the extension header contains a Next Header (NH) field, which is used to indicate the type of the next extension header. Before all extension headers, there is a header that contains an NH field that indicates the type of the first extension header.

It should be noted that MPLS 2.0 mainly changes the way data is carried and indicated, and the basic packet forwarding mechanism is consistent with the original MPLS. The same type of service/data may be carried in different methods in different data planes. If a type of service/ancillary data information is transmitted among multiple data planes, a regular solution is to terminate the encapsulation of the previous data plane at the edge node and regenerate the ancillary data information according to the service requirements. For example, in a case of the transmission of a packet from the MPLS to the IPv6, if there is a demand for end-to-end traffic Equal Cost Multi-path (ECMP) for the packet received from the MPLS, when the packet is sent from the head node of the MPLS, an entropy label is generated based on the payload content and placed in the label stack. At the edge node of the MPLS, the MPLS encapsulation is terminated (including the entropy label carried in the packet), and a value used for the ECMP is regenerated according to the payload content, and placed in the "flow label" field in the IPv6 header. That is, the edge node does not reuse the entropy label value generated at the head node, but regenerates a new entropy label value. This requires that the edge node and the service head node have the same capabilities for a specific service. If the packet carries multiple types of data, the requirements for the capabilities of the edge node should also be increased accordingly. Currently, there are also some data conversion methods for specific services, but these data conversion methods have relatively limited scope of application and cannot be used as a general solution.

After the proposal of the MPLS 2.0 architecture, MPLS 2.0 needs to ensure the compatibility of its functions, that is, the functions that already exist in the original MPLS dataplane should also be available in MPLS 2.0, but the form of the Indicator and the method for carrying data may be different.

Regarding the problem of low packet transmission efficiency between domains of different data planes in related technologies, no effective solution has yet been proposed.

Therefore, it is necessary to improve the related technologies to overcome the aforementioned shortcomings in the related technologies.

### Summary

Embodiments of the present disclosure provide a packet sending method and device, a storage medium and an electronic device, which may at least solve the problem of low packet transmission efficiency between domains of different data planes in related technologies.

According to an aspect of the embodiments of the present disclosure, provided is a packet sending method, including: acquiring a feature field in a first packet received from a first domain, wherein the feature field is used for acquiring ancillary data information carried in the first packet, and the ancillary data information includes at least one of: a carrying position of the ancillary data information and a data type of the ancillary data information; converting, according to the feature field, the first packet into a second packet conforming to a data plane format of a second domain; and sending the second packet to the second domain.

According to another aspect of the embodiments of the present disclosure, provided is a packet sending device, including: an acquisition module, configured to acquire a feature field in a first packet received from a first domain, wherein the feature field is used for acquiring ancillary data information carried in the first packet, and the ancillary data information includes at least one of: a carrying position of the ancillary data information and a data type of the ancillary data information; a conversion module, configured to convert, according to the feature field, the first packet into a second packet conforming to a data plane format of a second domain; and a sending module, configured to send the second packet to the second domain.

According to another aspect of the embodiments of the present disclosure, provided is a computer-readable storage medium. The computer-readable storage medium stores a computer program, wherein the computer program, when running on a processor, causes the processor to execute the described packet sending method.

According to another aspect of the embodiments of the present disclosure, also provided is an electronic device, including a memory, a processor and a computer program stored in the memory and operable on the processor, wherein the processor runs the computer program to execute the described packet sending method.

By means of the embodiments of the present disclosure, a feature field in a first packet received from a first domain is acquired, wherein the feature field is used for acquiring ancillary data information carried in the first packet, and the ancillary data information includes at least one of: a carrying position of the ancillary data information and a data type of the ancillary data information; the first packet is converted into a second packet conforming to a data plane format of a second domain according to the feature field; and the second packet is sent to the second domain. The scheme solves the problem of low packet transmission efficiency between domains of different data planes in related technologies.

### Brief Description of the Drawings

The drawings described herein are intended to provide further understanding of the present disclosure, and form a part of the present disclosure. The exemplary embodiments of the present disclosure and the description thereof are used to explain the present disclosure, and do not form improper limits to the present disclosure. In the drawings:
Fig. 1 is a schematic diagram of a Multi-Purpose Special Label solution in the related art;
Fig. 2 is a schematic diagram of carrying data after a label stack in the related art;
Fig. 3 is a block diagram of the hardware structure of a computer terminal of a packet sending method according to some embodiments of the present disclosure;
Fig. 4 is a flowchart (1) of a packet sending method according to some embodiments of the present disclosure;
Fig. 5 is a flowchart (2) of a packet sending method according to some embodiments of the present disclosure;
Fig. 6 is a schematic diagram of an MPLS and MPLS 2.0 interworking topology according to some embodiments of the present disclosure;
Fig. 7 is a schematic diagram of a packet sent by a node 1 according to some embodiments of the present disclosure;
Fig. 8 is a schematic diagram of a packet received by an edge node S according to some embodiments of the present disclosure;
Fig. 9 is a schematic diagram of a packet generated by an edge node according to some embodiments of the present disclosure;
Fig. 10 is a schematic diagram of a manner for carrying Detnet data in an MPLS according to some embodiments of the present disclosure;
Fig. 11 is a schematic diagram of a packet received by an edge node S from an MPLS domain according to some embodiments of the present disclosure;
Fig. 12 is a schematic diagram of a packet format after the conversion performed by a node S according to some embodiments of the present disclosure;
Fig. 13 is a schematic diagram of a packet received by an edge node S from an MPLS 2.0 domain according to some embodiments of the present disclosure;
Fig. 14 is a schematic diagram of a packet format after the conversion performed by a node S according to some embodiments of the present disclosure;
Fig. 15 is a schematic diagram of an IPv6 and MPLS 2.0 interworking scenario according to some embodiments of the present disclosure;
Fig. 16 is a schematic diagram of an IPv6 packet sent by a node 1 according to some embodiments of the present disclosure;
Fig. 17 is a schematic diagram of data carried in a Hop-By-Hop (HBH) header according to some embodiments of the present disclosure;
Fig. 18 is a schematic diagram of an MPLS packet after the conversion according to some embodiments of the present disclosure; and
Fig. 19 is a structural block diagram of a packet sending device according to some embodiments of the present disclosure.

### Detailed Description

In order to make those having ordinary skill in the art better understand the solutions of the present disclosure, the technical solutions in the embodiments of the present disclosure are clearly and completely described as follows with reference to the accompanying drawings in the embodiments of the present disclosure. Apparently, the described embodiments are merely a part rather than all of the embodiments of the present disclosure. All other embodiments acquired by those having ordinary skill in the art based on the embodiments of the present disclosure without creative efforts shall belong to the scope of protection of the present disclosure.

It should be noted that, terms such as "first" and "second" in the specification, claims, and accompanying drawings of the present disclosure are used to distinguish similar objects, but are not necessarily used to describe a specific sequence or order. It should be understood that the data so used may be interchanged where appropriate so that embodiments of the present disclosure described herein may be implemented in sequences other than those illustrated or described herein. In addition, the terms "include" and "have", and any variations thereof, are intended to cover a non-exclusive inclusion, for example, a process, method, system, product, or device that includes a series of operations or units is not necessarily limited to those operations or units that are expressly listed, but may include other operations or units that are not expressly listed or inherent to such process, method, product, or device.

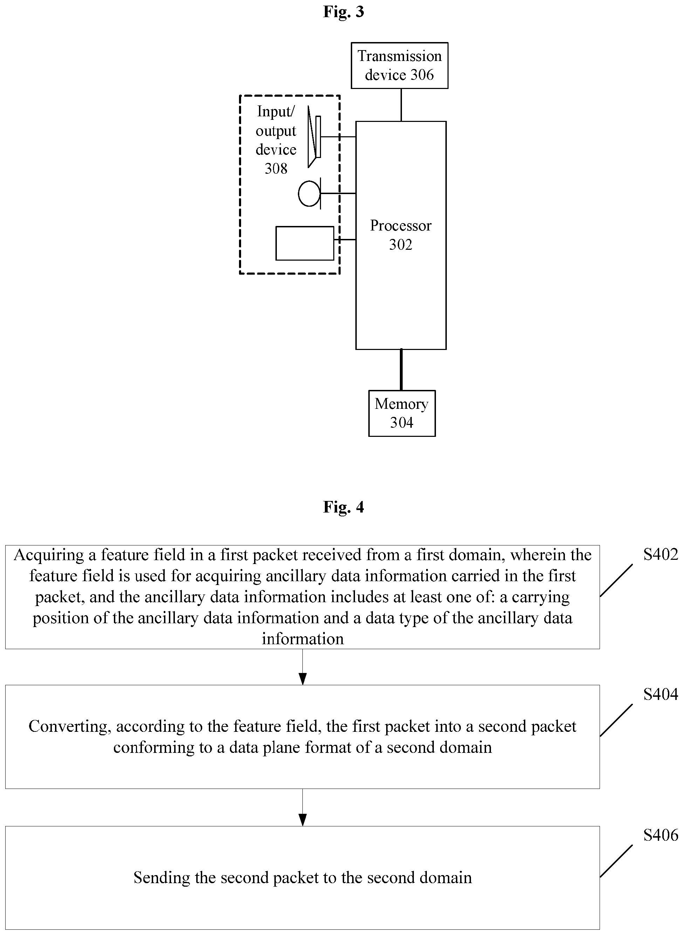

The method embodiments provided in the embodiments of the present disclosure may be executed in a computer terminal or a similar computing device. Taking the running on a computer terminal as an example, Fig. 3 is a block diagram of the hardware structure of a computer terminal of a packet sending method according to some embodiments of the present disclosure. As shown in Fig. 3, the computer terminal may include one or more processors 302 (only one is shown in Fig. 3) (the one or more processors 302 may include, but are not limited to, a Micro Processor Unit (MPU) or a Programmable Logic Device (PLD)) and a memory 304 configured to store data. In an exemplary embodiment, the computer terminal may further include a transmission device 306 and an input/output device 308 configured as a communication function. Those having ordinary skill in the art may understand that the structure shown in Fig. 3 is merely exemplary, and does not limit the structure of the foregoing computer terminal. For example, the computer terminal may further include more or fewer components than shown in Fig. 3, or have a function equivalent to that shown in Fig. 3, or adopt a different configuration more than that shown in Fig. 3.

The memory 304 may be configured to store a computer program, for example, a software program and modules of application software, such as a computer program corresponding to the packet sending method in the embodiments of the present disclosure. The one or more processors 302 run the computer program stored in the memory 304, so as to execute various function applications and data processing, that is, to implement the foregoing methods. The memory 304 may include a high-speed random access memory, and may also include a non-volatile memory, such as one or more magnetic storage devices, one or more flash memories, or other non-volatile solid-state memories. In some examples, the memory 304 may further include a memory remotely located with respect to the one or more processors 302, which may be connected to a computer terminal over a network. Examples of such network include, but are not limited to, the Internet, an intranet, a local area network, a mobile communication network, and combinations thereof.

The transmission device 306 is configured to receive or transmit data via a network. Specific examples of the described network may include a wireless network provided by a communication provider of the computer terminal. In an example, the transmitter device 306 may include a Network Interface Controller (NIC) that may be coupled to other network devices via a base station to communicate with the Internet. In an example, the transmission device 306 can be a Radio Frequency (RF) module configured to wirelessly communicate with the Internet.

Fig. 4 is a flowchart (1) of a packet sending method according to some embodiments of the present disclosure. As shown in Fig. 4, the packet sending method includes the following operations S402 to S406.

In operation S402, a feature field is acquired in a first packet received from a first domain, wherein the feature field is used for acquiring ancillary data information carried in the first packet, and the ancillary data information includes at least one of: a carrying position of the ancillary data information and a data type of the ancillary data information.

In operation S404, the first packet is converted, according to the attribute field, into a second packet conforming to a data plane format of a second domain.

In operation S406, the second packet is sent to the second domain.

It should be noted that, the data plane of the first domain includes MPLS, MPLS 2.0 and IPv6, the data plane of the second domain includes MPLS, MPLS 2.0 and IPv6, but is not limited thereto. The sending process of the packet is applied between the MPLS and the MPLS 2.0, between the IPv6 and the MPLS 2.0, or between the IPv6 and the MPLS.

In the embodiments of the present disclosure, a feature field in a first packet received from a first domain is acquired, wherein the feature field is used for acquiring ancillary data information carried in the first packet, and the ancillary data information includes at least one of: a carrying position of the ancillary data information and a data type of the ancillary data information; the first packet is converted into a second packet conforming to a data plane format of a second domain according to the feature field; and the second packet is sent to the second domain. The scheme solves the problem of low packet transmission efficiency between domains of different data planes in related technologies, and improves the packet transmission efficiency on different data planes.

In an exemplary embodiment, the packet sending method may further include: in the first domain, carrying the feature field in one of: a Special Purpose Label (SPL) located in a Multi-Protocol Label Switching (MPLS) label stack, an extended Special Purpose Label (eSPL) located in the MPLS label stack, a regular label having a non-special purpose label value and located in the MPLS label stack, an indicator reconstructed based on the SPL or the eSPL, a Traffic Class (TC) field in an Internet Protocol version-6 (IPv6) basic header, a Flow Label in the IPv6 basic header, a source address in the IPv6 basic header, a destination address in the IPv6 basic header, a triple Type Length Value (TLV) field in an IPv6 extension header, and an option field in the IPv6 extension header.

In an optional exemplary embodiment, the service/forwarding related data (rather than load data) carried in the packet are collectively referred to as ancillary data information.

For some services in the MPLS/SR-MPLS network, data needs to be additionally carried in the label stack of the MPLS or after the label stack of the MPLS. The carrying positions include:
1) A Special Purpose Label (SPL) or an extended Special Purpose Label (eSPL) indication. The core idea is the same regardless of whether the SPL or the eSPL is used for indication, that is, the corresponding fixed meaning can be acquired by directly reading the label value without the assistance of other means.

For example, a Generic Associated Channel Header (G-ACH) defined in RFC5586 is used for an Operations, Administration, and Maintenance (OAM) service. The G-ACH is only used for end-to-end data carrying. An intermediate node does not process the G-ACH and cannot be able to stack the G-ACH. A special purpose label needs to be carried at the bottom of a label stack, and the special purpose label indicates that G-ACH data is carried after the label stack.

For example, an Entropy Label (EL) stores a numerical value used for ECMP, and is located in an MPLS label stack. A special purpose label (e.g., an Entropy Label Indicator (ELI)) is required to indicate that an EL follows immediately after it.

2) Regular label indication, i.e., the indication using labels other than SPL/eSPL. When a regular label is used for indication, it is required to communicate through control plane protocols or pre-configured/agreed methods to define the indication meaning of the value taken by the regular label.

It should be noted that in both of the above-mentioned methods, the labels and the carried data have a one-to-one relationship, meaning that a label value correspondingly indicates a specific type of data.

In an exemplary embodiment, how to acquire the feature field in the first packet received from the first domain in the described operation S402 may be better understood by means of the following method. Whether a field in the first packet is a field required by an edge network node is determined, and the field required by the edge network node and carried in the first packet may be determined as the feature field. Alternatively or additionally, a feature field position for carrying the feature field in the first packet may be acquired from the edge network node, and the feature field may be acquired at the feature field position.

In an exemplary embodiment, after the field required by the edge network node and carried in the first packet is determined as the feature field, a technical solution including the following operations is further provided. In a case where the feature field has a global meaning, the first packet is converted, according to the feature field, into the second packet conforming to the data plane format of the second domain; in a case where the feature field in the first packet does not have a global meaning, when determining that the edge network node receives a target message, the feature field is identified through the edge network node, wherein a source of the target message includes at least one of: the first domain, pre-configured information of a device, a manual configuration message of a device, and a global configuration message.

It should be noted that the target message from the first domain may include an advertisement message and a negotiation message. The advertisement message refers to a message sent by a network node in the first domain to an edge network node in a form of an advertisement, and the edge network node directly receives the advertisement message. The negotiation message refers to a message accepted by both the network node in the first domain and the edge network node after negotiation, and may also be understood as a message pre-agreed between the network node in the first domain and the edge network node. After receiving the negotiation message, the edge network node also needs to respond to the network node in the first domain to indicate successful negotiation.

It should be noted that, the pre-configured information of the device refers to pre-configured device related information.

In an exemplary embodiment, before the second packet is sent to the second domain, a technical solution including the following operations is further provided. In a case where a feature field in the second packet does not have a global meaning, when determining that a network node in the second domain receives a target message, the feature field is identified through the network node in the second domain, wherein a source of the target message at least includes one of: the edge network node, pre-configured information of a device, a manual configuration message of a device, and a global configuration message.

In an exemplary embodiment, in order to better understand how to convert, according to the feature field, the first packet into the second packet conforming to the data plane format of the second domain in the operation S404, the following implementation is provided. The ancillary data information carried in the first packet may be acquired according to the carrying position indicated by the feature field; and a format of the feature field and a format of the ancillary data information may be converted according to the data plane format of the second domain to obtain the second packet, wherein the second packet includes the feature field and the ancillary data information after format conversion.

In an exemplary embodiment, the carrying position is in a label stack of the first packet, or the carrying position is after the label stack of the first packet. In a case where the carrying position is in the label stack of the first packet, the ancillary data information is carried in at least one of the following forms: an entropy label and an MPLS control word; and in a case where the carrying position is after the label stack of the first packet, the ancillary data information is carried in at least one of the following forms: a generic associated channel header, an MPLS extension header, and an MPLS control word.

It should be noted that, in the embodiments of the present disclosure, a data carrying manner in which data is not directly carried after the label stack but a specific header field is added before the data is generally referred to as an MPLS Extended Sublayer manner. The MPLS extension header may include an extension header in the MPLS 2.0,

In an optional exemplary embodiment, in the IPv6, in addition to a service payload (or short as payload) that may be carried after an IP header, some other service/forwarding related data may be additionally carried after the IP header. The main carrying modes and positions are introduced as follows.
1) A flow label field in an IPv6 basic header: the flow label field is mainly used in an ECMP scenario, and a part of space of the flow label field may be used to carry information such as a network slice identifier or a flow identifier. For example, when a Traffic Class field is equal to a specific value, which positions in the flow label field carry network slice identifier information may be indicated, or which information is carried in the flow label field may be determined by means of pre-configuration or agreement. However, no matter which scheme is used, the carried data type may be identified by reading the flow label field or by reading the Traffic Class field and the Flow Label field.
2) A Traffic Class field in the IPv6 basic header.
3) An option part of an HBH and a DOH, which data is carried may be identified based on an option Type field in the option part.
4) Data may be carried in a routing header, wherein a data format is related to the type of the routing header. For example, data may be carried in a Segment Routing Header (SRH) by means of an SRH TLV, and which data is carried may be identified based on a type field in the SRH TLV.
5) Information may be carried in a source address/a destination address, wherein additional space may be divided from the source address/the destination address to store the information. Data carried in this manner generally needs to be pre-agreed/pre-configured, for example, which bits of the source address of a designated address range can be used to carry the network slice identification information may be pre-agreed/pre-configured.

It should be noted that, for the two carrying manners of 3) and 4), a new type of IPv6 extension header may also be defined. However, no matter which carrying manners is adopted for carrying the information/data, generally, data carried in the IPv6 extension header carries a field corresponding to a data type, and by using the field corresponding to the data type, what type of data is carried may be identified.

In an exemplary embodiment, a technical solution is further provided. In a case where the feature field in the first packet does not have a global meaning, the existence of the ancillary data information carried after the feature field may be learnt through the target message; and the ancillary data information carried after the feature field may be acquired, and the ancillary data information carried after the feature field may be converted according to the data plane format in the second domain to generate the second packet.

In an exemplary embodiment, also provided is a technical solution for converting, according to the feature field, the first packet into the second packet conforming to the data plane format of the second domain. The ancillary data information carried in the first packet may be acquired according to the feature field, wherein the ancillary data information is carried in one of: a flow label field in an IPv6 basic header, a Traffic Class (TC) field in the IPv6 basic header, a hop-by-hop option header in an IPv6 extension header, a destination option header in the IPv6 extension header, a routing header in the IPv6 extension header, a source address in the IPv6 basic header, and a destination address in the IPv6 basic header, wherein the ancillary data information carried in the IPv6 extension header includes a type field for identifying a type of the ancillary data information, data needing to be processed hop-by-hop is stored after the label stack, and In-band Operation Administration and Maintenance (IOAM) data is stored in the extension header after the label stack. The ancillary data information may be converted according to the data plane format in the second domain, and the second packet may be generated according to the converted ancillary data information.

The packet sending method is further described in combination with the following embodiments.

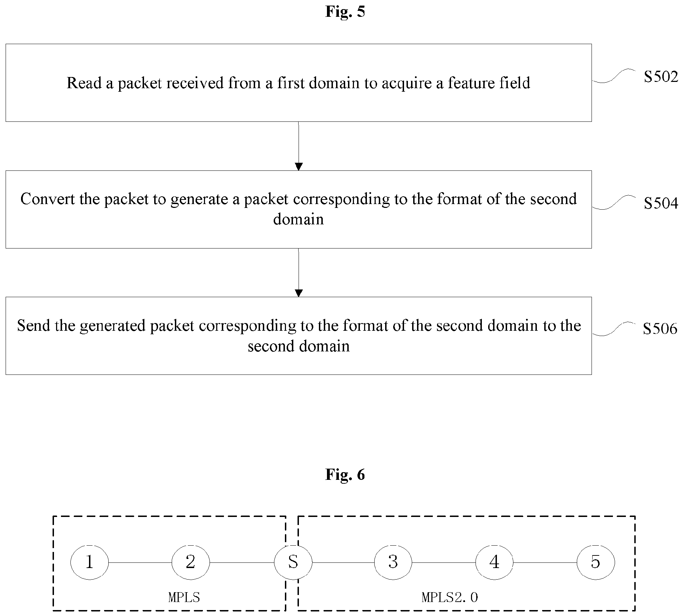

In an optional exemplary embodiment, a packet sending method is provided with reference to Fig. 5. Fig. 5 is a flowchart (2) of a packet sending method according to some embodiments of the present disclosure. As shown in Fig. 5, the packet sending method is applied to edge nodes between different data planes, and includes the following operations S502 to S506.

In operation S502, an edge node reads a packet (equivalent to the described first packet) received from a first domain to acquire a feature field.

It should be noted that the foregoing feature field refers to a field of data information carried in a packet, and includes a carrying position of data, specific data type information, and the like. For example, the carrying position of data may include a position in a label stack in the MPLS or a position after the label stack in the MPLS.

It should be noted that, the feature field is not necessarily explicit indication information, and may also be implicitly contained within a specific data carrying field, that is, the feature field and the carried data may be an integrated whole. For example, in the IPv6 basic header, if there is no other indication, the Flow Label field carries ECMP information by default.

In addition, the feature field may be a field having a global meaning under standard specifications, or may be a field having a specific meaning only within a limited range by means of a control plane protocol advisement/negotiation, configuration, pre-agreement, etc., and therefore, an edge node needs to receive advisement/negotiation information of a control plane or perform corresponding configuration/agreement, so as to achieve the purpose of identifying the feature field. The control plane includes a data plane of the second domain.

In the MPLS, the feature field may be an SPL or an eSPL. Alternatively, the feature field may also be a regular label with a non-special purpose label value, but the regular label may have a special meaning by means of global configuration or control plane protocol-based advertisement. In MPLS 2.0, the feature field is a newly defined Indicator, for example, a Multi-Purpose Special Label. When the feature field is the Multi-Purpose Special Label, the existence of the Indicator only indicates that data is carried after the label stack, and the specific data type needs to be determined after acquiring the data after the label stack. In the IPv6 data plane, the feature field may include fields such as TC, Flow Label, source address, and destination address in the IPv6 basic header, and may further include fields such as TLV or option in the IPv6 extension header.

In an optional exemplary embodiment, by identifying the feature field by the edge node, the position of the ancillary data information can be acquired from the received first packet. In addition, when identifying the feature field by the edge node, there is also a special case that the received first packet does not carry the ancillary data information.

In an optional exemplary embodiment, the manners of acquiring the feature field are introduced as follows. The edge node may scan a received packet completely and identifies, per field, whether the received packet has a feature field concerned by the edge node. Alternatively, the edge node may have learnt in advance which feature field is carried in which positions in the packet received from the first domain, and may acquire information directly from the corresponding positions. For example, it is indicated in advance through configuration on the edge node that only the slice identification field carried in the HBH option in the IPv6 packet needs to be converted, then after receiving the packet from the first domain, the edge node directly acquires the corresponding field from the corresponding location.

For the convenience of description, the feature field indication and the data carrying are introduced separately in the following, but the following two special cases are included.
(1) The case where the feature field and the carrying field are integrated as a whole.
(2) The case where data is not carried.

The case (1) is applicable to all the embodiments below, and the case (2) is applicable to the embodiment 3 below.

In operation S504, the edge node converts the packet to generate a packet corresponding to the format of the second domain.

The packet conversion in operation S504 further includes the following operations S5041 and S5042.

In operation S5041, carried data is acquired in the corresponding position of the packet according to the feature field, and then the format of the feature field and the ancillary data information is converted according to the data plane format in the second domain.

When the feature field converted by the edge node does not have a global meaning defined in the standard, the meaning of the feature field also needs to be indicated in a way of protocol advisement/configuration/pre-agreement, so that the meaning of the feature field can be identified in the second domain.

In operation S5042, conversion of the data plane format is performed. For example, the format of an IPv6 data plane is converted into the format of an MPLS data plane, or the format of an MPLS data plane is converted into the format of an IPv6 data plane.

It should be noted that, this embodiment does not limit an execution sequence of the operations S5041 and S5042.

When format conversion between MPLS and MPLS 2.0 is performed, the position of ancillary data information may not be the same, for example, for the data carried in a label stack of the MPLS, after being converted to MPLS 2.0, the data may be carried in a label stack, and may also be carried after the label stack.

After the packet format conversion is completed, the following operations are performed.

In operation S506, the generated packet corresponding to the format of the second domain is sent to the second domain.

In an embodiment, whether the edge node needs to enter the processing procedure in operation S504 may be determined by configuring a policy at the edge node, for example, a packet with a specific characteristic (e.g., a packet having a certain source/destination address, or a packet received at a certain port) needs to be converted. Alternatively, the edge node may be controlled, by indication carried in a packet, to enter the processing procedure in operation S504, for example, by an SRv6 network programming, a specific SID may be assigned so that the edge node proceeds to the data conversion process when processing to the specific SID.

### Embodiment 1

This embodiment specifically describes a manner of interworking between an MPLS data plane and MPLS 2.0 when an Indicator has a global meaning. This embodiment takes the case where the feature field Indicator in MPLS 2.0 is a Multi-Purpose Special Label as an example. It should be noted that the data format carried in the stack bottom is only exemplary.

Fig. 6 is a schematic diagram of an MPLS and MPLS 2.0 interworking topology according to some embodiments of the present disclosure. As shown in Fig. 6, an end-to-end SR-MPLS path 1-2-S-3-4-5 passes through two data planes, wherein the S node is an edge node that supports two data plane formats of MPLS and MPLS 2.0 at the same time. To meet the ECMP requirement of this path, an entropy label needs to be carried in the label stack.

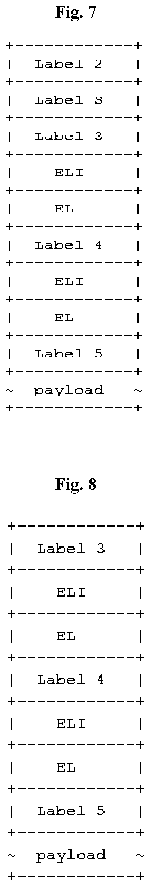

Fig. 7 is a schematic diagram of a packet sent by a node 1 according to some embodiments of the present disclosure. Fig. 7 shows an MPLS label stack in the packet sent by a head node 1. The controller or the node 1 calculates a path and determines positions of an ELI and an EI in the label stack. Fig. 8 is a schematic diagram of a packet received by an edge node S according to some embodiments of the present disclosure. As shown in Fig. 8, after a packet is forwarded to an S node according to a topmost label, the S node serves as an edge node to scan the label stack and find that there are two special purpose labels ELI indicating the entropy label.

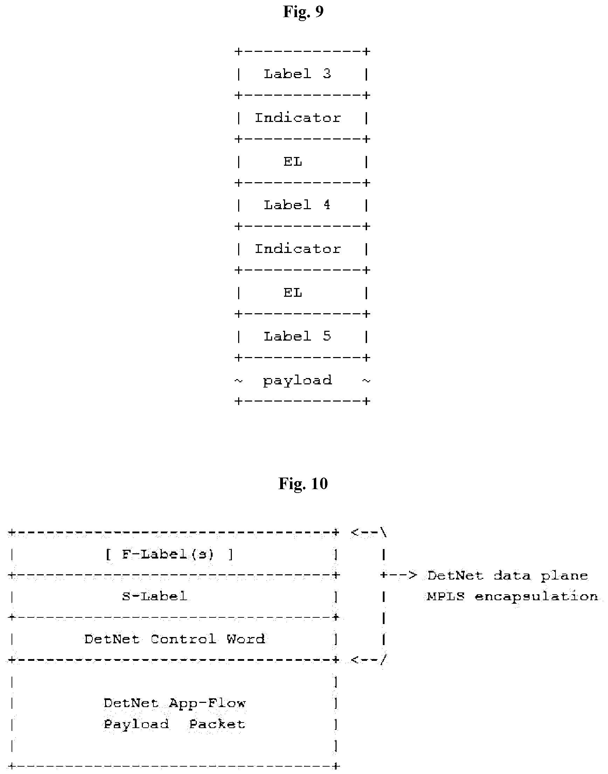

The edge node converts the format of the ELI into an indicator format in the MPLS 2.0 domain. In addition, according to the indication of the ELI in the original packet, the edge node extracts the entropy label following the ELI and sequentially places the entropy label after the Indicator, without changing other labels in a stack, so as to regenerate a label stack. Fig. 9 is a schematic diagram of a packet generated by an edge node according to some embodiments of the present disclosure, and the packet is as shown in Fig. 9. After the packet is generated, the packet is forwarded according to the topmost label according to the forwarding rule of the MPLS, and is sent to the node 3 in the MPLS 2.0 domain.

### Embodiment 2

This embodiment specifically describes a manner of interworking between an MPLS data plane and MPLS 2.0 when a feature field does not have a global meaning.

Fig. 10 is a schematic diagram of a manner for carrying Detnet data in an MPLS according to some embodiments of the present disclosure. Fig. 10 illustrates a typical manner for carrying Detnet data in the MPLS. After a forwarding label (F-Label), a service label (S-Label) is required to indicate that there is Detnet data following the S-Label (carried in a manner of a Detnet control word). The value of the S-Label is a regular MPLS label, and the meaning thereof needs to be advertised through a control plane protocol (e.g., Resource Reservation Protocol-Traffic Engineering (RSVP-TE), Label Distribution Protocol (LDP), etc.), or needs to be configured through centralized configuration (e.g., Network Configuration Protocol (Netconf), Yet Another Next Generation (YANG), Path Computation Element Communication Protocol (PCEP), etc.), so that other nodes can learn the special indication meaning thereof.

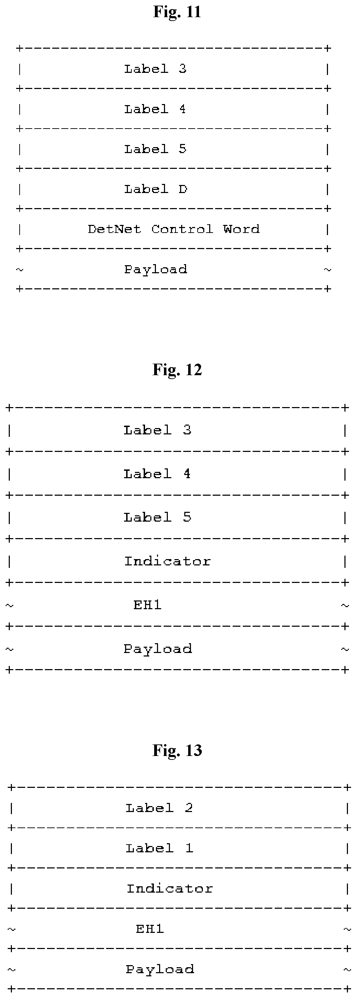

In the topology shown in Fig. 6, the packet received by the edge node S from the MPLS domain is shown in Fig. 11. Fig. 11 is a schematic diagram of a packet received by an edge node S from an MPLS domain according to some embodiments of the present disclosure. By means of control plane protocol-based advertisement or global configuration, the node S learns that a Label D will be used to indicate Detnet data following the Label D. By scanning the label stack, the node S finds an Indicator Label D, takes out the Detnet control word data following the Label D, and performs format conversion on the Detnet control word data, so as to obtain the packet after the conversion which is as shown in Fig. 12. Fig. 12 is a schematic diagram of a packet format after the conversion performed by a node S according to some embodiments of the present disclosure. The Indicator indicates that data is carried after the stack, and the specific data type needs to be determined by reading an extension header after the stack bottom. In this embodiment, EH1 includes information stored in the Detnet control word of the original packet.

Similarly, in a reverse direction, the packet received by the edge node S from the MPLS2.0 field is shown in Fig. 13, and Fig. 13 is a schematic diagram of a packet received by an edge node S from an MPLS 2.0 domain according to some embodiments of the present disclosure. The edge node S learns, by reading the Indicator, that the data is carried after the label stack, and learns that the EH1 carries Detnet information by reading the data after the stack. The node S needs to convert the Indicator into a form of indicating the Detnet data with S-Label in the MPLS domain. The embodiment takes Label D2 as an example, and because Label D2 is a regular label (a label except the SPL/eSPL with global meaning), the special meaning of Label D2 needs to be indicated in a manner of control plane advertisement or global configuration in the MPLS domain.

In addition, data in the EH1 needs to be extracted and stored in the form of a Detnet control word.

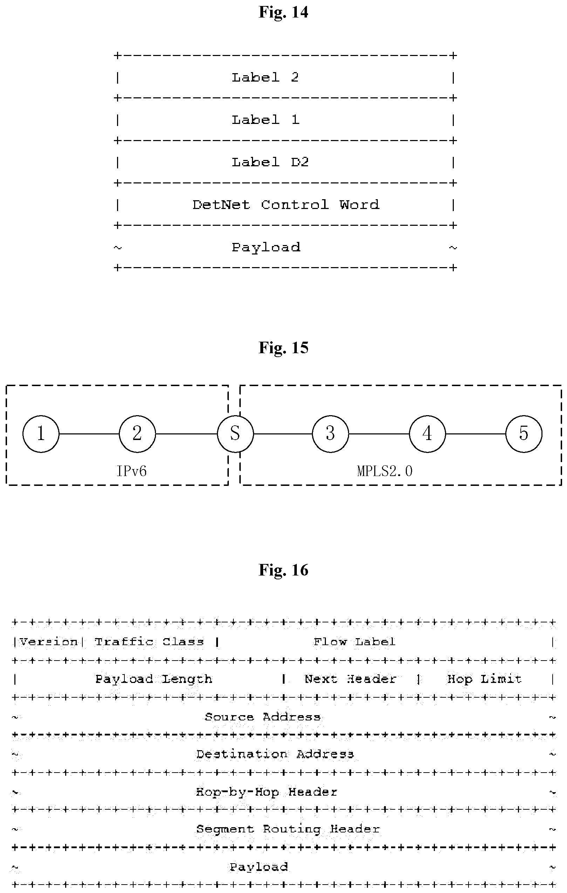

The data format after the conversion by the node S is as shown in Fig. 14. Fig. 14 is a schematic diagram of a packet format after the conversion performed by a node S according to some embodiments of the present disclosure.

It should be noted that the edge nodes in two directions may not be the same node.

### Embodiment 3

This embodiment specifically describes a manner of interworking between the MPLS 2.0 and the IPv6 data plane.

Fig. 15 is a schematic diagram of an IPv6 and MPLS 2.0 interworking scenario according to some embodiments of the present disclosure. As shown in Fig. 15, an end-to-end path 1-2-S-3-4-5 passes through two data planes, and the S node is an edge node that supports two data plane formats of IPv6 and MPLS 2.0 at the same time.

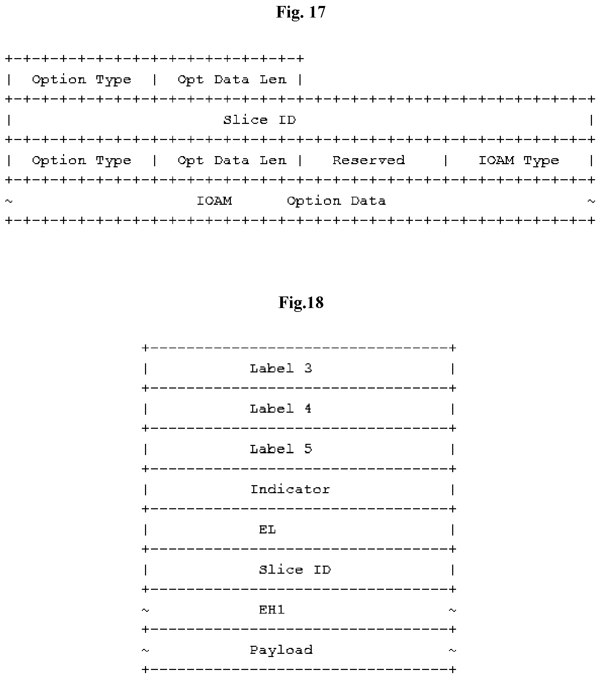

The packet sent by node 1 is shown in Fig. 16. Fig. 16 is a schematic diagram of an IPv6 packet sent by a node 1 according to some embodiments of the present disclosure. The flow label carries information used for ECMP, and two options in the HBH header respectively carry slice and IOAM data information. The content carried in the HBH is shown in Fig. 17. Fig. 17 is a schematic diagram of data carried in a Hop-By-Hop (HBH) header according to some embodiments of the present disclosure, and different option types correspond to different types of carried data.

The SRH carries path information in the SRv6 (IPv6) domain. The SRH of the packet sent by node 1 is <SID-2, SID-S, SL=2>, wherein SID-2 and SID-S are the SRv6 SIDs of node 2 and node S respectively. SID-S is a variant of a BINDING SID and has a specific function of removing an IPv6 header. The MPLS label stack is encapsulated as < Label3, Label4, Label5>.

After receiving the packet, the node S finds that packet conversion needs to be performed, and possible triggering manners include:
1) Local configuration;
2) SRv6 network programming, for example, the SID-S may be added with a behavior of packet format conversion in addition to the foregoing functions.

After finding that the packet needs to be converted, the node S scans the packet, extracts the content stored in the flow label and the HBH option according to the feature field, performs conversion according to the indication and storage format of the MPLS 2.0, and encapsulates the content to obtain an MPLS packet. As shown in Fig. 18, Fig. 18 is a schematic diagram of an MPLS packet after the conversion according to some embodiments of the present disclosure. The Indicator indicates that the Indicator is followed by an entropy label and slice identification information, and data that needs to be processed hop by hop is stored after the label stack. The extension header EH1 after the MPLS label stack stores In-Band Operation Administration and Maintenance (IOAM) data.

The number and positions of entropy labels in the figure are only illustrative, and may also be placed in other positions according to the capacity of ERLD and MSD of each node.

In this embodiment, besides associating an MPLS label stack corresponding to the next domain in a BSID manner, a possible manner is to carry the MPLS label stack as a payload after the IPv6 packet header, and strip the IPv6 packet header at an edge node.

A universal packet sending method is proposed in the above embodiments. The packet sending method may be used for end-to-end transmission of a service/data, and is suitable for solving the problem of interworking and functional compatibility of multiple data planes. When a second domain receives a packet from a first domain, the packet needing to be converted can be identified according to the feature field in the packet, and the format of the packet needing to be converted can be converted into the format of the next data plane.

Through the description of the foregoing embodiments, those having ordinary skill in the art may clearly understand that the packet sending method according to the foregoing embodiments may be implemented by software in addition to a necessary universal hardware platform, and definitely may also be implemented by hardware. However, in many cases, the former is a preferred implementation. Based on such understanding, the essence of the technical solutions of the embodiments of the present disclosure or the part contributing to the related art may be embodied in the form of a software product. The computer software product is stored in a storage medium (such as a Read-Only Memory (ROM)/Random Access Memory (RAM), a magnetic disk, or an optical disk), and includes several instructions for instructing a terminal device (which may be a mobile phone, a computer, a server, or a network device) to execute the packet sending methods of the embodiments of the present disclosure.

The embodiments of the present disclosure further provide a packet sending device. The device is used for implementing the described embodiments and exemplary implementations, and what has been described will not be elaborated. The term "module", as used hereinafter, is a combination of software and/or hardware capable of realizing a predetermined function. Although the device described in the following embodiments is preferably implemented by software, implementation of hardware or a combination of software and hardware is also possible and conceived.

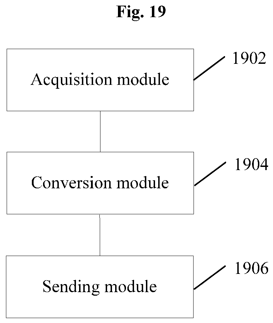

Fig. 19 is a structural block diagram of a packet sending device according to some embodiments of the present disclosure. As shown in Fig. 19, the packet sending device includes:
an acquisition module 1902, configured to acquire a feature field in a first packet received from a first domain, wherein the feature field is used for acquiring ancillary data information carried in the first packet, and the ancillary data information includes at least one of: a carrying position of the ancillary data information and a data type of the ancillary data information;
a conversion module 1904, configured to convert, according to the feature field, the first packet into a second packet conforming to a data plane format of a second domain; and
a sending module 1906, configured to send the second packet to the second domain.

It should be noted that, the data plane of the first domain includes MPLS, MPLS 2.0 and IPv6, the data plane of the second domain includes MPLS, MPLS 2.0 and IPv6, but is not limited thereto. The sending process of the packet is applied between the MPLS and the MPLS 2.0, between the IPv6 and the MPLS 2.0, or between the IPv6 and the MPLS.

By means of the device, a feature field in a first packet received from a first domain is acquired, wherein the feature field is used for acquiring ancillary data information carried in the first packet, and the ancillary data information includes at least one of: a carrying position of the ancillary data information and a data type of the ancillary data information; the first packet is converted into a second packet conforming to a data plane format of a second domain according to the feature field; and the second packet is sent to the second domain. The scheme solves the problem of low packet transmission efficiency between domains of different data planes in related technologies, and improves the packet transmission efficiency on different data planes.

In an exemplary embodiment, in the first domain, the feature field is carried in one of: a Special Purpose Label (SPL) located in a Multi-Protocol Label Switching (MPLS) label stack, an extended Special Purpose Label (eSPL) located in the MPLS label stack, a regular label having a non-special purpose label value and located in the MPLS label stack, an indicator reconstructed based on the SPL or the eSPL, a Traffic Class (TC) field in an Internet Protocol version-6 (IPv6) basic header, a Flow Label in the IPv6 basic header, a source address in the IPv6 basic header, a destination address in the IPv6 basic header, a triple Type Length Value (TLV) field in an IPv6 extension header, and an option field in the IPv6 extension header.

In an exemplary embodiment, the acquisition module is further configured to determine whether a field in the first packet is a field required by an edge network node, and determine the field required by the edge network node and carried in the first packet as the feature field; or, acquire, from the edge network node, a feature field position for carrying the feature field in the first packet, and acquire the feature field at the feature field position.

In an exemplary embodiment, the packet sending device further includes a first identification module, which is configured to, in a case where the feature field has a global meaning, convert, according to the feature field, the first packet into the second packet conforming to the data plane format of the second domain; in a case where the feature field in the first packet does not have a global meaning, when determining that the edge network node receives a target message, identify the feature field through the edge network node, wherein a source of the target message includes at least one of: the first domain, pre-configured information of a device, a manual configuration message of a device, and a global configuration message.

In an exemplary embodiment, the described packet sending device further includes a second identification module, which is configured to, in a case where a feature field in the second packet does not have a global meaning, when determining that a network node in the second domain receives a target message, identify the feature field through the network node in the second domain, wherein a source of the target message at least includes one of: the edge network node, pre-configured information of a device, a manual configuration message of a device, and a global configuration message.

It should be noted that the target message from the first domain may include an advertisement message and a negotiation message. The advertisement message refers to a message sent by a network node in the first domain to an edge network node in a form of an advertisement, and the edge network node directly receives the advertisement message. The negotiation message refers to a message accepted by both the network node in the first domain and the edge network node after negotiation, and may also be understood as a message pre-agreed between the network node in the first domain and the edge network node. After receiving the negotiation message, the edge network node also needs to respond to the network node in the first domain to indicate successful negotiation.

It should be noted that, the pre-configured information of the device refers to pre-configured device related information.

In an exemplary embodiment, the conversion module is further configured to acquire the ancillary data information carried in the first packet according to the carrying position indicated by the feature field; and convert a format of the feature field and a format of the ancillary data information according to the data plane format of the second domain to obtain the second packet, wherein the second packet includes the feature field and the ancillary data information after format conversion.

In an exemplary embodiment, the carrying position is in a label stack of the first packet, or the carrying position is after the label stack of the first packet; in a case where the carrying position is in the label stack of the first packet, the ancillary data information is carried in at least one of the following forms: an entropy label and an MPLS control word; and in a case where the carrying position is after the label stack of the first packet, the ancillary data information is carried in at least one of the following forms: a generic associated channel header, an MPLS extension header, and an MPLS control word.

In an exemplary embodiment, the packet sending device further includes a packet generation module, which is configured to, in a case where the feature field in the first packet does not have a global meaning, learn, through the target message, about the ancillary data information carried after the feature field; and acquire the ancillary data information carried after the feature field, and convert, according to the data plane format in the second domain, the ancillary data information carried after the feature field to generate the second packet.

In an exemplary embodiment, the conversion module is further configured to acquire, according to the feature field, the ancillary data information carried in the first packet, wherein the ancillary data information is carried in one of: a flow label field in an IPv6 basic header, a Traffic Class (TC) field in the IPv6 basic header, a hop-by-hop option header in an IPv6 extension header, a destination option header in the IPv6 extension header, a routing header in the IPv6 extension header, a source address in the IPv6 basic header, and a destination address in the IPv6 basic header, wherein the ancillary data information carried in the IPv6 extension header includes a type field for identifying a type of the ancillary data information, data needing to be processed hop-by-hop is stored after the label stack, and In-band Operation Administration and Maintenance (IOAM) data is stored in the extension header after the label stack; convert the ancillary data information according to the data plane format in the second domain, and generate the second packet according to the converted ancillary data information.

In an exemplary embodiment, the computer-readable storage medium may include, but is not limited to, any medium that can store a computer program, such as a Universal Serial Bus (USB) flash drive, a Read-Only Memory (ROM), a Random Access Memory (RAM), a removable hard disk, a magnetic disk, or an optical disc.

For specific examples in this embodiment, reference may be made to the examples described in the foregoing embodiments and exemplary embodiments, and details are not repeatedly described in this embodiment.

The embodiments of the present disclosure further provide an electronic device, including a memory and a processor. The memory stores a computer program. The processor is configured to run the computer program to execute operations in any one of the method embodiments.

In this embodiment, the processor may be configured to run the computer program to execute the following operations:
S 1, acquiring a feature field in a first packet received from a first domain, wherein the feature field is used for acquiring ancillary data information carried in the first packet, and the ancillary data information includes at least one of: a carrying position of the ancillary data information and a data type of the ancillary data information;
S2, converting, according to the feature field, the first packet into a second packet conforming to a data plane format of a second domain; and
S3, sending the second packet to the second domain.

In an exemplary embodiment, the electronic device may further include a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those having ordinary skill in the art should understand that each module or each operation of the present disclosure may be implemented by a universal computing device, and the modules or operations may be concentrated on a single computing device or distributed on a network formed by a plurality of computing devices, and may be implemented by program codes executable for the computing devices, so that the modules or operations may be stored in a storage device for execution with the computing devices. The shown or described operations may be executed in sequences different from those described here in some cases, or may form each integrated circuit module respectively, or multiple modules or operations therein may form a single integrated circuit module for implementation. As such, the present disclosure is not limited to any particular hardware and software combination.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall belong to the scope of protection of the present disclosure.

## Claims

1. A packet sending method, comprising:
acquiring a feature field in a first packet received from a first domain, wherein the feature field is used for acquiring ancillary data information carried in the first packet, and the ancillary data information comprises at least one of: a carrying position of the ancillary data information and a data type of the ancillary data information;
converting, according to the feature field, the first packet into a second packet conforming to a data plane format of a second domain; and
sending the second packet to the second domain.

2. The packet sending method according to claim 1, further comprising:
in the first domain, carrying the feature field in one of: a Special Purpose Label, SPL, located in a Multi-Protocol Label Switching, MPLS, label stack, an extended Special Purpose Label, eSPL, located in the MPLS label stack, a regular label having a non-special purpose label value and located in the MPLS label stack, an indicator reconstructed based on the SPL or the eSPL, a Traffic Class, TC, field in an Internet Protocol version-6, IPv6, basic header, a Flow Label in the IPv6 basic header, a source address in the IPv6 basic header, a destination address in the IPv6 basic header, a triple Type Length Value, TLV, field in an IPv6 extension header, and an option field in the IPv6 extension header.

3. The packet sending method according to claim 1, wherein the acquiring a feature field in a first packet received from a first domain comprises at least one of:
determining whether a field in the first packet is a field required by an edge network node, and determining the field required by the edge network node and carried in the first packet as the feature field; or,
acquiring, from the edge network node, a feature field position for carrying the feature field in the first packet, and acquiring the feature field at the feature field position.

4. The packet sending method according to claim 3, wherein after the determining the field required by the edge network node and carried in the first packet as the feature field, the packet sending method further comprises:
in a case where the feature field has a global meaning, converting, according to the feature field, the first packet into the second packet conforming to the data plane format of the second domain;
in a case where the feature field in the first packet does not have a global meaning, when determining that the edge network node receives a target message, identifying the feature field through the edge network node, wherein a source of the target message comprises at least one of: the first domain, pre-configured information of a device, a manual configuration message of a device, and a global configuration message.

5. The packet sending method according to claim 3, wherein before the sending the second packet to the second domain, the packet sending method further comprises:
in a case where a feature field in the second packet does not have a global meaning, when determining that a network node in the second domain receives a target message, identifying the feature field through the network node in the second domain, wherein a source of the target message at least comprises one of: the edge network node, pre-configured information of a device, a manual configuration message of a device, and a global configuration message.

6. The packet sending method according to claim 1, wherein the converting, according to the feature field, the first packet into a second packet conforming to a data plane format of a second domain comprises:
acquiring the ancillary data information carried in the first packet according to the carrying position indicated by the feature field; and
converting a format of the feature field and a format of the ancillary data information according to the data plane format of the second domain to obtain the second packet, wherein the second packet comprises the feature field and the ancillary data information after format conversion.

7. The packet sending method according to claim 1, wherein the carrying position is in a label stack of the first packet, or the carrying position is after the label stack of the first packet;
wherein in a case where the carrying position is in the label stack of the first packet, the ancillary data information is carried in at least one of the following forms: an entropy label and an MPLS control word; and in a case where the carrying position is after the label stack of the first packet, the ancillary data information is carried in at least one of the following forms: a generic associated channel header, an MPLS extension header, and an MPLS control word.

8. The packet sending method according to claim 4, wherein the converting, according to the feature field, the first packet into a second packet conforming to a data plane format of a second domain comprises:
in a case where the feature field in the first packet has a global meaning, learning, through the target message, about the ancillary data information carried after the feature field; and
acquiring the ancillary data information carried after the feature field, and converting, according to the data plane format in the second domain, the ancillary data information carried after the feature field to generate the second packet.

9. The packet sending method according to claim 1, wherein the converting, according to the feature field, the first packet into a second packet conforming to a data plane format of a second domain comprises:
acquiring, according to the feature field, the ancillary data information carried in the first packet, wherein the ancillary data information is carried in one of: a flow label field in an IPv6 basic header, a Traffic Class, TC, field in the IPv6 basic header, a hop-by-hop option header in an IPv6 extension header, a destination option header in the IPv6 extension header, a routing header in the IPv6 extension header, a source address in the IPv6 basic header, and a destination address in the IPv6 basic header; and
converting the ancillary data information according to the data plane format in the second domain, and generating the second packet according to the converted ancillary data information.

10. A packet sending device, comprising:
an acquisition module, configured to acquire a feature field in a first packet received from a first domain, wherein the feature field is used for acquiring ancillary data information carried in the first packet, and the ancillary data information comprises at least one of: a carrying position of the ancillary data information and a data type of the ancillary data information;
a conversion module, configured to convert, according to the feature field, the first packet into a second packet conforming to a data plane format of a second domain; and
a sending module, configured to send the second packet to the second domain.

11. A computer-readable storage medium, wherein the computer-readable storage medium stores a computer program, wherein the computer program, when running on a processor, causes the processor to execute the packet sending method according to any one of claims 1 to 9.

12. An electronic device, comprising a memory and a processor, wherein the memory stores a computer program, and the processor is configured to run the computer program to execute the packet sending method according to any one of claims 1 to 9.
